# EUROPEAN PATENT SPECIFICATION

(11) **EP 0 924 078 B1**
(45) Date of publication and mention of the grant of the patent: **04.04.2007**
(21) Application number: 98310480.3
(22) Date of filing: 18.12.1998
(51) Int. Cl.: B41J 2/14, B41J 2/16, B41J 2/175

(54) **A filter for removing contaminants from a fluid and a method for forming same**
Filter zum Beseitigen von Verunreinigungen aus einer Flüssigkeit und Verfahren zum Herstellen desselben
Filtre pour éliminer les impuretés d'un fluide et sa méthode de fabrication

(30) Priority: 18.12.1997 US 993431
(43) Date of publication of application: 23.06.1999
(73) Proprietor: LEXMARK INTERNATIONAL, INC., Lexington, Kentucky 40550 (US)
(72) Inventor: Sullivan, Carl E., Versailles, Kentucky 40383 (US)
(74) Representative: Beacham, Annabel Rose

(56) References cited:
- EP-A- 0 518 467
- EP-A- 0 657 291
- WO-A-95/13860
- JP-A- 2 001 324
- US-A- 4 233 610
- US-A- 5 124 717
- US-A- 5 154 815
- US-A- 5 308 442

## Description

This invention relates to a filter for removing contaminants from a fluid and a process for forming same and, more particularly, to a filter adapted for use in an ink jet print cartridge for filtering contaminants from ink prior to the ink flowing to a heater chip.

US 5,124,717 discloses a printhead comprising two silicon wafers, one being a channel plate having a channel groove set communicating with a recessed manifold in the channel plate formed on the surface and the other a heater plate having a set of heating elements and addressing electrodes formed on the surface. An integral filter membrane is formed on the channel plate.

Drop-on-demand ink jet printers use thermal energy to produce a vapor bubble in an ink-filled chamber to expel an ink droplet. A thermal energy generator or heating element, usually a resistor, is located in the chamber on a heater chip near a discharge orifice or nozzle. A plurality of chambers, each provided with a single heating element, are provided in the printer's printhead. The printhead typically comprises the heater chip and a plate having a plurality of the discharge orifices formed therein. The printhead forms part of an ink jet print cartridge which also comprises an ink-filled container.

The print cartridge container includes one or more ink chambers. For a monochrome or single color print cartridge, one chamber is provided. For a three color print cartridge, three chambers are included. The print cartridge container may also include a filter/standpipe assembly for each chamber. The standpipe defines a passageway through which ink flows as it travels from the chamber to the printhead. The filter is attached to the standpipe and functions to remove air bubbles and contaminants from the ink before the ink reaches the printhead. Contaminants, if not removed from the ink, may block orifices in the printhead orifice plate, thereby preventing ink from being ejected from those orifices.

EP 0657291 discloses an ink jet printer cartridge having a standpipe with a filter cap secured on top of the standpipe.

The quality of printed images produced by an ink jet printer depends to a large degree on the resolution of the printer. Higher or finer resolution wherein the dots are more closely spaced provides for higher quality images.

A consideration with increasing the resolution of ink jet printers is that increased resolution results in more printed dots per unit area. For example, doubling print resolution from 600 x 600 dpi to 1200 x 1200 dpi results in four times as many dots per unit area. Since the number of dots per unit area increases with increased resolution, the size of each printed dot must decrease in order to avoid saturating the print media. Hence, the size of the orifices in the orifice plate must decrease. In order to prevent the smaller orifices from becoming blocked or obstructed by contaminants contained in ink, finer filters are required.

Conventional filters are typically made from a metal mesh. It is believed that very fine metal mesh filters would be costly to produce. Further, it is believed that ink pressure drop across the metal mesh filter would be large due to the meandering flow path the ink must take as it passes through the metal mesh.

Accordingly, there is a need for an improved filter which is capable of removing particles of varying sizes including very small particles from ink without also effecting a large drop in fluid pressure across the filter.

The present invention provides a print cartridge container/filter assembly according to claim 1 and a method for forming a print cartridge container/filter assembly for use in such a print cartridge container/filter assembly according to claim 15.

With the present invention, an improved filter is provided which is capable of removing particles of varying sizes including very small particles from a fluid without effecting a large drop in fluid pressure across the filter. The filter is adapted for use in an ink jet print cartridge for filtering contaminants from ink prior to the ink flowing to a printhead. It is also contemplated that the filter may be used in other applications where filters capable of removing particles of varying sizes including very small particles are desired.

The filter of the present invention is formed from a silicon substrate. The substrate has first and second etch resistant material layers on its opposing sides. One of the layers includes a plurality of pores, each preferably having an area or size of between 0.5 µm² and 25 µm². The second layer defines a filter layer which filters air bubbles and contaminants from ink passing through the filter. In contrast to conventional metal mesh filters, the silicon filter of the present invention has a direct flow path. Hence, the resistance to ink flow through the silicon filter is reduced. As resistance to ink flow decreases, pressure drop across the filter also decreases.

In a preferred embodiment of the present invention, the second layer includes two or more filter sections, each comprising a plurality of pores. The second layer further includes at least one reinforcement rib positioned between the two filter sections.
Fig. 1 is a perspective view, partially broken away, of an ink jet printing apparatus having a print cartridge constructed in accordance with the present invention;
Fig. 2 is a view of a portion of a heater chip coupled to an orifice plate with sections of the orifice plate removed at two different levels;
Fig. 3 is a view taken along section line 3-3 in Fig. 2;
Fig. 4 is a schematic view in cross-section of a portion of a print cartridge formed in accordance with the present invention;
Fig. 5 is a schematic cross sectional view of a filter formed in accordance with the present invention;
Fig. 6 is a plan view, partially broken away, of the filter illustrated in Fig. 5;
Fig. 6A is an enlarged view of a portion of the filter illustrated in Fig. 6;
Figs. 7-9 are schematic cross sectional views illustrating the process for forming the filter illustrated in Fig. 5;
Fig. 10 is a plan view of a filter formed in accordance with a preferred embodiment of the present invention; and

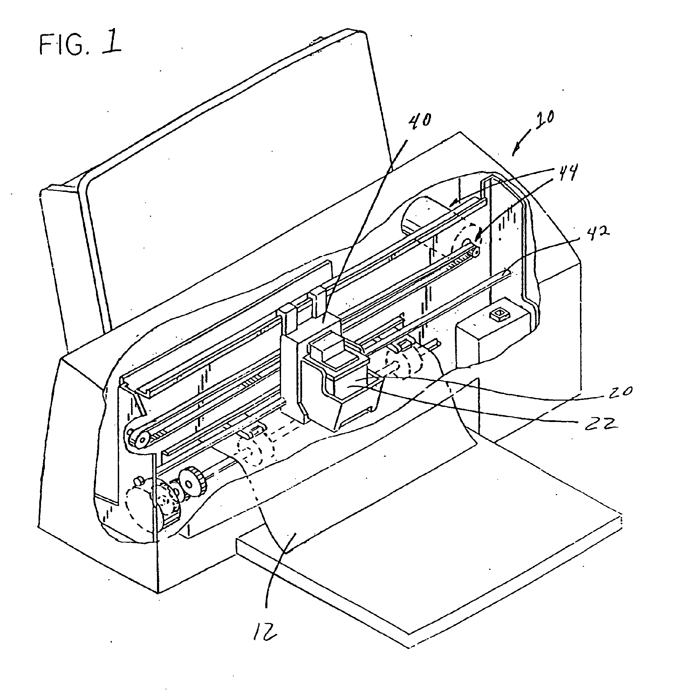

Fig. 1 is a cross sectional view of a filter formed in accordance with the present invention.

The following description is made in relation to preferred embodiments of the present invention.

Referring now to Fig. 1, there is shown an ink jet printing apparatus 10 having a print cartridge 20 constructed in accordance with the present invention. The cartridge 20 is supported in a carrier 40 which, in turn, is slidably supported on a guide rail 42. A drive mechanism 44 is provided for effecting reciprocating movement of the carrier 40 and the print cartridge 20 back and forth along the guide rail 42. As the print cartridge 20 moves back and forth, it ejects ink droplets onto a paper substrate 12 provided below it.

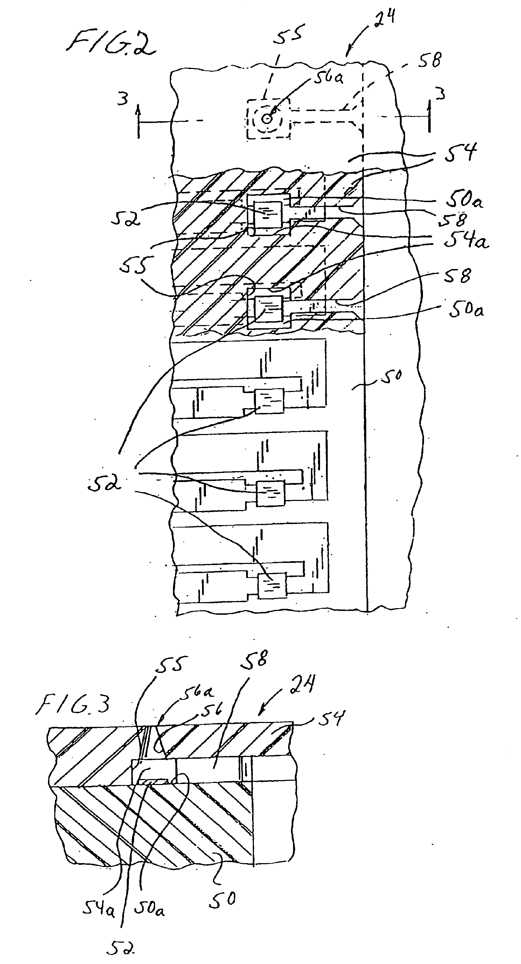

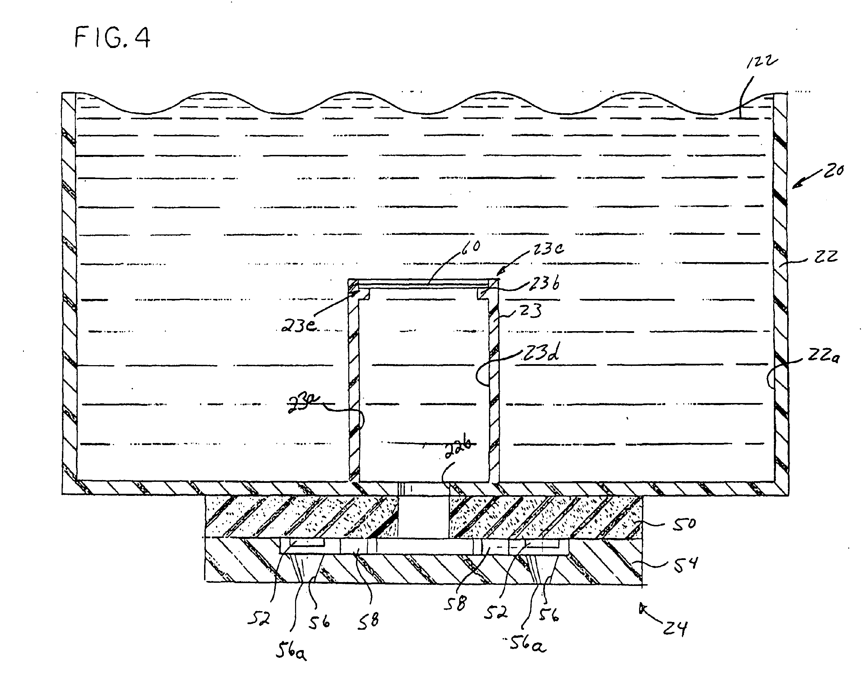

The print cartridge 20 comprises a container 22, see Figs. 1 and 4, and a printhead 24, see Figs. 2-4, which is adhesively bonded or otherwise secured to the container 22. The container 22 includes an internal chamber 22a filled with ink 122, see Fig. 4. It further includes an outlet 22b. A standpipe 23, which forms part of the container 22, extends into the chamber 22a and defines a passageway 23a along which the ink 122 flows as it travels from the chamber 22a to the container outlet 22b. From the outlet 22b, the ink 122 flows to the printhead 24. A block of foam material (not shown) may be provided in the chamber 22a. The container 22 in the illustrated embodiment includes only one chamber 22a. However, it is contemplated that the container 22 may include more than one chamber, e.g., three chambers. Such a container is disclosed in U.S. Patent No. 5,576,750.

The container 22 may be formed from a polymeric material. In the illustrated embodiment, the container 22 is formed from polyphenylene oxide, which is commercially available from the General Electric Company under the trademark "NORYL SE-1." Other materials not explicitly set out herein may also be used.

The printhead 24 comprises a heater chip 50 having a plurality of resistive heating elements 52, see Figs. 2-4. The printhead 24 further includes a plate 54 having a plurality of openings 56 extending through it which define a plurality of orifices 56a through which droplets are ejected. The orifices 56a typically have a size (i.e., a diameter) of from about 5 µm to about 50 µm. The plate 54 may be bonded to the chip 50 via any art recognized technique, including a thermocompression bonding process. When the plate 54 and the heater chip 50 are joined together, sections 54a of the plate 54 and portions 50a of the heater chip 50 define a plurality of bubble chambers 55. Ink supplied by the container 22 flows into the bubble chambers 55 through ink supply channels 58. The resistive heating elements 52 are positioned on the heater chip 50 such that each bubble chamber 55 has only one heating element 52. Each bubble chamber 55 communicates with one orifice 56a, see Fig. 3.

The resistive heating elements 52 are individually addressed by voltage pulses provided by a printer energy supply circuit (not shown). Each voltage pulse is applied to one of the heating elements 52 to momentarily vaporize the ink in contact with that heating element 52 to form a bubble within the bubble chamber 55 in which the heating element 52 is located. The function of the bubble is to displace ink within the bubble chamber 55 such that a droplet of ink is expelled from an orifice 56a associated with the bubble chamber 55.

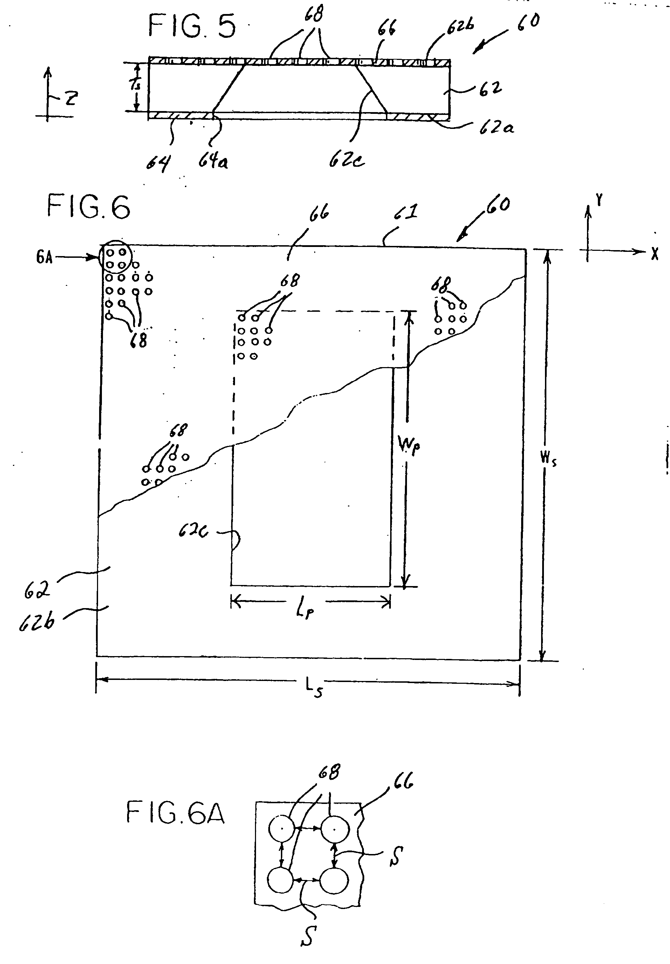

In accordance with the present invention, a silicon filter 60 is associated with the standpipe 23 of the container 22. In the illustrated embodiment, the standpipe 23 is formed having a ledge 23b at its entrance portion 23c, see Fig. 4. The ledge 23b together with an inner wall 23d of the standpipe 23 define a filter-receiving recess 23e. A commercially available adhesive, such as an epoxy, may be used to bond the filter 60 to the ledge 23b and the inner wall 23d. In the illustrated embodiment, the inner wall 23d of the standpipe 23 and the outer peripheral edge 61 of the filter 60 are generally rectangular in shape, see Fig. 6. They may also be square, circular, triangular or have any other geometric shape.

The filter 60 comprises a silicon substrate 62 having opposing first and second outer surfaces 62a and 62b, respectively, and a passage 62c extending completely through it, see Fig. 5. The substrate 62 has a length L_{S} of from about 40 µm to about 50800 µm, and preferably about 6 mm; a width W_{S} of from about 40 µm to about 50800 µm, and preferably about 6 mm; and, a thickness T_{S} of from about 25 µm to about 2 mm, and preferably about 400 µm, see Figs. 5 and 6. The passage 62c is rectangular in shape where it meets the second outer surface 62b, see Fig. 6. It may also be square, oval, elliptical, or have any other geometric shape. At the second outer surface 62b, the passage 62c has a length L_{P} of from about 5 µm to about 49000 µm, and preferably about 5.5 mm, and a width W_{P} of from about 5 µm to about 49000 µm, and preferably about 5.5 mm.

A first etch resistant material layer 64 is formed on the first substrate surface 62a. The first layer 64 includes an opening 64a extending completely through it which communicates with the substrate passage 62c. The opening 64a has generally the same shape and size as the passage 62c where the passage 62c meets the first substrate surface 62a. The first layer 64 has a thickness in the Z-direction, see Fig. 5, of from about 1 µm to about 20 µm, including all ranges subsumed therein, and preferably from about 1 µm to about 2.5 µm.

A second etch resistant material layer 66 is formed on the second substrate surface 62b. The second layer 66 includes a plurality of pores 68 extending completely through it. At least a portion of the pores 68 communicate with the substrate passage 62c. The pores 68 have an area or size in an X-Y plane, see Fig. 6, of from about 0.5 µm² to about 25 µm², including all ranges subsumed therein; and preferably, from about 0.5 µm² to about 17 µm²; more preferably, from about 1.0 µm² to about 8 µm²; and most preferably, from about 1.0 µm² to about 5 µm². The spacing S between adjacent pores is from about 1 µm to about 50 µm, and preferably about 6 µm, see Fig. 6A. The second layer 66 has a thickness in the Z-direction, see Fig. 5, of from about 1 µm to about 20 µm, including all ranges subsumed therein, preferably, from about 1.0 µm to about 5.0 µm, and most preferably from about 1.0 µm to about 2.5 µm. The second layer 66 defines a filter layer which filters air bubbles and contaminants from the ink 122 as the ink 122 passes from the chamber 22a to the printhead 24.

The first and second layers 64 and 66 may be formed from any one of a number of known etch resistant materials including, for example, silicon nitride, silicon carbide, aluminum, tantalum, and silicon dioxide. It is believed that a stronger bond will result when the filter 60 is adhesively bonded to the standpipe 23 if the one etch resistant material layer 64 or 66 bonded to the standpipe 23 is formed from a metal. Other materials not explicitly set out herein may also be used when forming the layers 64 and 66.

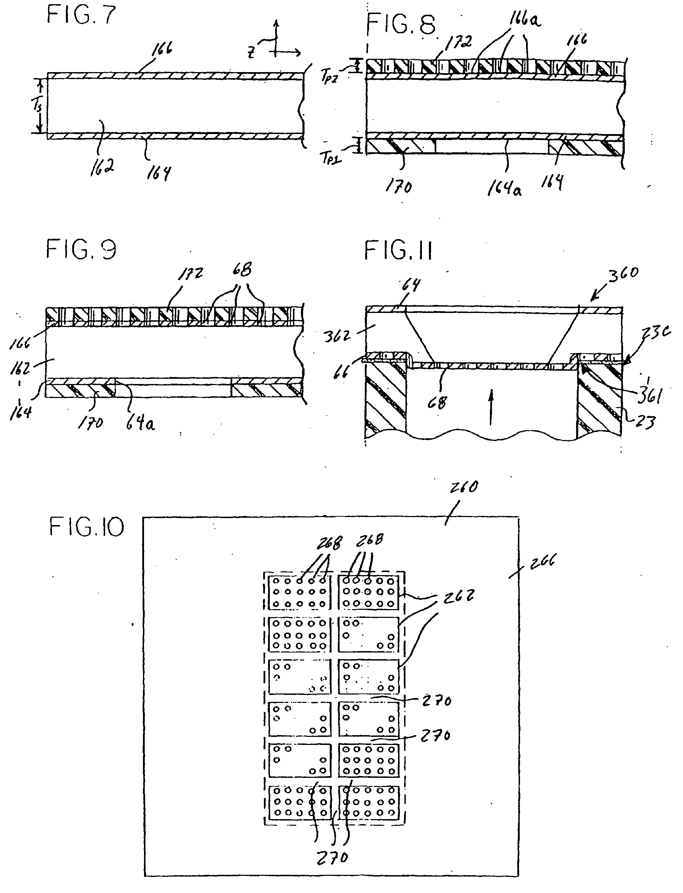

The process for forming the filter 60 will now be described with reference to Figs. 7-9. A silicon wafer 162 having a thickness T_{S} of from about 400 µm to about 650 µm is provided. The thickness of the wafer 162 is not critical and may fall outside of this range. A plurality of filters 60 are formed on a single wafer 162. However, for ease of illustration, only a portion of the wafer is illustrated in Figs. 7-9.

First and second etch resistant material layers 164 and 166 are formed on opposite sides of the wafer 162, see Fig. 7. The layers 164 and 166 may be formed from any one of a number of known etch resistant materials including, for example, silicon nitride, silicon carbide, aluminum, tantalum, silicon dioxide, and the like. In the illustrated embodiment, silicon nitride is deposited simultaneously onto the outer surfaces of the wafer 162 using a conventional low-pressure vapor deposition process or a plasma enhanced chemical vapor deposition process. Alternatively, silicon dioxide layers may be thermally grown on the wafer 162, or aluminum or tantalum layers may be formed on the opposing wafer surfaces via a conventional sputter or evaporation process.

The first layer 164 has a thickness in the Z-direction, see Fig. 7, of from about 1 µm to about 20 µm, and preferably from about 1.0 µm to about 2.5 µm. The second layer 166 has a thickness in the Z-direction, see Fig. 7, of from about 1 µm to about 20 µm, and preferably from about 1.0 µm to about 2.5 µm.

After the first and second layers 164 and 166 are deposited onto the wafer 162, a first photoresist layer 170 is formed over the first etch resistant material layer 164 via a conventional spinning process. The layer 170 has a thickness T_{P1} of from about 100 µm to about 50 µm, and preferably from about 1.0 µm to about 5.0 µm. The photoresist material may be a negative or a positive photoresist material. In the illustrated embodiment, the layer 170 is formed from a negative photoresist material which is commercially available from Olin Microelectronic Materials under the product designation "SC-100 Resist." After the first layer 170 is spun onto the wafer 162, it is softbaked at an appropriate temperature so as to partially evaporate photoresist solvents to promote adhesion of the layer 170 to the wafer 162. A further reason for softbaking the first layer 170 is to prevent a first mask, to be discussed below, from adhering to the first layer 170.

A first mask (not shown), having a plurality of blocked or covered areas which correspond to the first layer openings 64a in the filters 60, is positioned over the first photoresist layer 170. The first mask is aligned in a conventional manner such as to the wafer flat (not shown). Thereafter, unblocked portions of the first photoresist layer 170 are exposed to ultraviolet light to effect curing or polymerization of the exposed portions. The first mask is then removed. Thereafter, the unexposed or uncured portions of the first photoresist layer 170 are removed using a conventional developer chemical. In the illustrated embodiment, the unpolymerized portions are removed by spraying a developer, such as one which is commercially available from Olin Microelectronic Materials under the product designation "PF developer," onto the first wafer side while the wafer 162 is spinning. After the development process has been initiated, a mixture of about 90% developer chemical and 10% isopropyl alcohol, by volume, is sprayed onto the first side of the spinning wafer 162. Finally, the development process is stopped by spraying only isopropyl alcohol onto the spinning wafer 162. After the unpolymerized portions of the first photoresist layer 170 are removed from the wafer 162, portions 164a (only one portion is illustrated in Fig. 8) of the first etch resistant material layer 164 are exposed.

Instead of spraying the three different development compositions onto the wafer 162, the wafer 162 may be sequentially placed in three baths containing, respectively, 100% developer, a mixture of about 90% developer and 10 % isopropyl alcohol, and 100% isopropyl alcohol. The wafer 162 remains in the first bath until the development process has been initiated. It is removed from the second bath and placed in the third bath after the unpolymerized portions of the first layer 170 have been removed. The wafer 162 is preferably agitated when in each of the baths.

A second photoresist layer 172 is formed over the second etch resistant material layer 166 via a conventional spinning process. The layer 172 has a thickness T_{P2} of from about 100 Å to about 50 µm, and preferably from about 1.0 µm to about 5.0 µm. The photoresist material from which the layer 172 is formed may be a negative or a positive photoresist material. In the illustrated embodiment, the layer 172 is formed from the same material as the first layer 170. After the second layer 172 is spun onto the wafer 162, it is softbaked at an appropriate temperature so as to partially evaporate photoresist solvents to promote adhesion of the layer 172 to the wafer 162.

A second mask (not shown), having a plurality of blocked or covered areas which correspond to the second layer pores 68 in the filters 60, is positioned over the second photoresist layer 172. The entire second mask may be provided with blocked areas so that each filter 60 will have a second layer 66 provided with pores 68 that extend over substantially the entire extent of the layer 66. Alternatively, blocked areas in the second mask may be formed only in portions of the mask that are generally coextensive with or slightly larger than portions having the blocked areas in the first mask. As such, each filter 60 will be formed having pores 68 only in the portion of the second layer 66 that extends over the substrate passage 62c.

The second mask is aligned in a conventional manner such as to the wafer flat (not shown). It is also contemplated that the mask may include one or more alignment markers which are aligned with one or more alignment marks provided on the wafer 162. After alignment, unblocked portions of the second photoresist layer 172 are exposed to ultraviolet light so as to effect curing or polymerization of the exposed portions. The second mask is then removed. The unpolymerized portions of the second photoresist layer 172 are removed in the same manner as the unpolymerized portions of the first photoresist layer 170. As can be seen in Fig. 8, after the unpolymerized portions of the second photoresist layer 172 are removed from the wafer 162, portions 166a of the second etch resistant material layer 166 are exposed.

Following the development of the second photoresist layer 172, the first and second layers 170 and 172 are hardbaked in a conventional manner so as to effect final evaporation of solvents in those layers 170 and 172.

The patterns formed in the first and second photoresist layers 170 and 172 are transferred to the first and second etch resistant material layers 164 and 166, see Fig. 9, using a conventional etching process. For example, a conventional reactive ion etching process may be used. When the first and second etch resistant material layers 164 and 166 are formed from silicon nitride, the reactive gas supplied to the reactive ion etcher is CF₄ For the etching of aluminum, a chlorine gas may be supplied. When the layers 164 and 166 are formed from tantalum, a CF₄ gas is preferably provided.

After the patterns have been transferred to the first and second etch resistant material layers 164 and 166, the polymerized photoresist material remaining on the wafer 162 is removed in a conventional manner. For example, a conventional reactive ion etcher receiving an O₂ plasma may be used. Alternatively, a commercially available resist stripper such as one which is available from Olin Microelectronic Materials under the product designation "Microstrip" may be used.

Finally, a micromachining step is implemented to form the substrate passages 62c in the silicon wafer 162. This step involves placing the wafer 162 in an etchant bath such that exposed portions of the silicon are etched away. A tetramethyl ammonium hydroxide (TMAH) based bath may be used. The TMAH based bath comprises, by weight, from about 5% to about 40%, and preferably about 10% tetramethyl ammonium hydroxide, and from about 60% to about 95%, and preferably about 90%, water. The TMAH/water solution is passivated by dissolving silicon and/or silicic acid into the TMAH/water solution until the solution has a pH of from about 11 to about 13. A more detail discussion of passivating TMAH solutions can be found in the paper: U. Schnakenberg, W. Benecke, and P. Lange, THAHW Etchants for Silicon Micromachining," In Proc. Int. Conf. on Solid State Sensors and Actuators (Transducers 1991), pages 815-818, San Francisco, June 1991. The passivated TMAH/water solution is advantageous as it will not attack metal etch resistant layers 164 and 166. If the first and second etch resistant material layers 164 and 166 are formed from a non-metal, such as silicon nitride, a potassium hydroxide (KOH) based bath may be used. The KOH bath comprises, by weight, from about 5% to about 75%, and preferably about 45% potassium hydroxide, and from about 25% to about 95%, and preferably about 55% water. Thus, if the first and second etch resistant material layers 164 and 166 are formed from a metal, such as aluminum or tantalum, a tetramethyl ammonium hydroxide (TMAH) based bath should be used as a KOH bath will attack the metal layers 164 and 166. When sufficient etching has occurred such that the silicon substrate passage 62c for each filter 60 is formed, see Fig. 5, the wafer 162 is removed from the bath.

Thereafter, the wafer 162 is diced into individual filters 60.

The sequence of the above steps may vary. For example, the first pattern as defined by the developed first photoresist layer 170 may be transferred to the first etch resistant material layer 164 using a conventional etching process and the first photoresist layer 170 removed before the second photoresist layer 172 is formed on the second etch resistant material layer 166. It is also contemplated that the second photoresist layer 172 may be formed over the second etch resistant material layer 166, softbaked, exposed to ultraviolet light and developed before the first photoresist layer 170 is formed over the first etch material layer 164.

A filter 260, formed in accordance with a preferred embodiment of the present invention, is shown in Fig. 10. In this preferred embodiment, the second etch resistant material layer 266 includes a plurality of filter sections 262 separated by reinforcement ribs 270. Each filter section 262 includes a plurality of pores 268. In the illustrated embodiment, the portions of the second layer 266 beyond the filter sections 262 do not have pores 268. By providing one or more reinforcement ribs 270 in the second layer 266, the thickness of the second layer 266 may be reduced, thereby reducing fluid pressure drop across the second layer 266. Preferably, the thickness of the second layer 266 is about 1.0 µm. At this thickness, it is believed that the pressure drop across the filter 260 is negligible.

A filter 360, formed in accordance with the present invention, is shown in Fig. 11, where like reference numerals indicate like elements. The filter 360 includes an outer circumferential recess 361 which is adapted to be fitted over and adhesively secured to the entrance portion 23c of a container standpipe 23. The recess 361 may be formed in the following manner. Before the first and second etch resistant material layers 164 and 166 are deposited on the wafer 162, a conventional photoresist layer, e.g., the SC-100 resist material described above, is formed on the second side of the wafer such that an outer peripheral portion of each filter silicon substrate 362 is exposed. A conventional etching process is then performed, such as a reactive ion etching process, so as to remove to a predefined depth a portion of silicon along the outer periphery of each silicon substrate 362. Thereafter, first and second etch material layers 164 and 166 are formed on the wafer 162 and the process for forming the remaining portions of the filters are performed as discussed above with regard to Figs. 7-9.

It is also contemplated that the heater chip 50 may comprise an edge-fed heater chip rather than a center-fed heater chip.

## Claims

1. A print cartridge container/filter assembly comprising:
a container (22) including at least one chamber (22a) for receiving ink, said container including a standpipe (23) extending into said chamber (22a) and defining a passageway (23a) for ink to flow out from said chamber; and
a filter (60), said filter (60) associated with said standpipe (23) for filtering contaminants from the ink prior to the ink flowing out from said standpipe (23);
said print cartridge container/filter assembly **characterized by** said filter (60) comprising a silicon substrate (62) having opposing first (62a) and second surfaces (62b) and a passage (62c) extending therethrough, a first etch resistant material layer (64) formed on said first substrate surface (62a) and including at least one opening (64a) which extends through said first layer (64) and communicates with said substrate passage (62c), and a second etch resistant material layer (66) formed on said second substrate surface (62b) and including a plurality of pores (68) extending through said second layer (66) and communicating with said substrate passage, said second layer defining a filter layer which filters contaminants from ink passing through said second layer; wherein said filter (60) includes an outer circumferential recess (361) which is adapted to mate with an end portion of said standpipe (23c).

2. A print cartridge container/filter assembly as set forth in claim 1, wherein said standpipe (23) comprises a hollow column having an inner ledge (23b) which is adapted to receive said filter (60).

3. A print cartridge container/filter assembly as set forth in claim 2, wherein said column is generally rectangular in shape.

4. A print cartridge container/filter assembly as set forth in any preceding claim, wherein said plurality of pores (268) extending through said second layer (66) are divided into two or more sections (262), said second layer (66) further including at least one reinforcement rib (270) positioned between said two filter sections (262).

5. A print cartridge container/filter assembly as set forth in any preceding claim wherein at least one of said first (64) and second (66) layers is formed from a metal.

6. A print cartridge container/filter assembly as set forth in claim 5, wherein said metal comprises aluminum or tantalum.

7. A print cartridge container/filter assembly as set forth in any of claims 1 to 4, wherein at least one of said first (64) and second (66) layers is formed from a material selected from the group consisting of silicon nitride, silicon carbide, aluminum, tantalum, and silicon dioxide.

8. A print cartridge container/filter assembly as set forth in any preceding claim wherein only a portion of said second etch resistant material layer (66) includes pores.

9. A print cartridge container/filter assembly as set forth in any preceding claim, wherein said pores have a size of between 0.5 µm² and 25 µm².

10. A print cartridge container/filter assembly as set forth in any preceding claim, wherein said pores have a size of between 1 µm² and 17 µm².

11. A print cartridge container/filter assembly as set forth in any preceding claim, wherein said pores (68) have a size from 1 µm² to 8 µm².

12. A print cartridge container/filter assembly as set forth in any preceding claim, wherein said pores (68) have a size of from 1 µm² to 5 µm².

13. A print cartridge container/filter assembly as set forth in any preceding claim, wherein said second layer has a thickness of from 1 µm to 20 µm.

14. A print cartridge container/filter assembly as set forth in any preceding claim, wherein said second layer (66) has a thickness of from 1 µm to 2.5 µm.

15. A method for forming a print cartridge container/filter assembly for filtering contaminants from ink prior to the ink flowing to a heater chip (50), said print cartridge container/filter assembly comprising a container (22) including at least one chamber (22a) for receiving ink, said container (22) including a standpipe (23) extending into said chamber (22a) and defining a passageway (23a) for ink to flow out from said chamber (22a) said method **characterized by** comprising the steps for forming a filter of:
providing a silicon substrate (62) having opposing first (62a) and second surfaces (62b);
forming a first etch resistant material layer (64) on said first substrate surface (62b), said first layer (64) including at least one opening (64a) which extends through said first layer (64);
forming a second etch resistant material layer (66) on said second substrate surface (62b), said second layer (66) including a plurality of pores (68) extending through said second layer (66), said plurality of pores (68) having a size of between 0.5 µm² and 25 µm²; and
forming at least one passage (62c) through said silicon substrate which communicates with said opening in said first layer (64a) and said pores (68) in said second layer (66);
forming an outer circumferential recess (361) in said filter; and comprising the steps for forming said print cartridge container/filter assembly of:
mating said outer circumferential recess with an end portion (23c) of said standpipe.

16. A method as set forth in claim 15, wherein said step of forming at least one passage (62c) in said silicon substrate (62) comprises the step of etching away a portion of said silicon substrate using a tetramethyl ammonium hydroxide etching solution.

## Patentansprüche

1. Druckpatronenbehälter/Filteranordnung, umfassend:
einen Behälter (22), der mindestens eine Kammer (22a) zur Aufnahme von Tinte umfasst, wobei der Behälter ein Steigrohr (23) umfasst, das sich in der Kammer (22a) erstreckt und einen Durchgangsweg (23a) für Tinte zum Herausfließen aus der Kammer begrenzt; und
ein Filter (60), wobei das Filter (60) mit dem Steigrohr (23) verbunden ist, um Verunreinigungen aus der Tinte zu filtern, bevor die Tinte aus dem Steigrohr (23) herausfließt;
wobei die Druckpatronenbehälter/Filteranordnung **dadurch gekennzeichnet ist, dass** das Filter (60) umfasst: ein Siliciumsubstrat (62), das eine entgegengesetzte erste (62a) und zweite Oberfläche (62b) und einen Durchlass (62c) aufweist, der sich **dadurch** erstreckt, eine erste ätzbeständige Materialschicht (64), die auf der ersten Substratoberfläche (62a) ausgebildet ist und mindestens eine Öffnung (64a) umfasst, die sich durch die erste Schicht (64) erstreckt und mit dem Substratdurchlass (62c) in Verbindung steht, und eine zweite ätzbeständige Materialschicht (66), die auf der zweiten Substratoberfläche (62b) ausgebildet ist und eine Mehrzahl von Poren (68) umfasst, die sich durch die zweite Schicht (66) erstrecken und mit dem Substratdurchlass in Verbindung stehen, wobei die zweite Schicht eine Filterschicht festlegt, die Verunreinigungen aus Tinte filtert, die durch die zweite Schicht hindurchfließt; wobei das Filter (60) eine äußere Umfangsaussparung (361) umfasst, die angepasst ist, um mit einem Endteil des Steigrohrs (23c) in Eingriff zu treten.

2. Druckpatronenbehälter/Filteranordnung nach Anspruch 1, bei der das Steigrohr (23) eine hohle Säule umfasst, die einen inneren vorspringenden Teil (23b) aufweist, der angepasst ist, um das Filter (60) aufzunehmen.

3. Druckpatronenbehälter/Filteranordnung nach Anspruch 2, bei der die Säule im Allgemeinen rechteckigförmig ist.

4. Druckpatronenbehälter/Filteranordnung nach einem vorangehenden Anspruch, bei der die Mehrzahl von Poren (268), die sich durch die zweite Schicht (66) erstrecken, in zwei oder mehr Abschnitte (262) eingeteilt sind, wobei die zweite Schicht (66) weiter mindestens eine Verstärkungsrippe (270) umfasst, die zwischen den zwei Filterabschnitten (262) positioniert ist.

5. Druckpatronenbehälter/Filteranordnung nach einem vorangehenden Anspruch, bei der mindestens eine von der ersten (64) und zweiten (66) Schicht aus einem Metall gebildet ist.

6. Druckpatronenbehälter/Filteranordnung nach Anspruch 5, bei der das Metall Aluminium oder Tantal umfasst.

7. Druckpatronenbehälter/Filteranordnung nach einem der Ansprüche 1 bis 4, bei der mindestens eine von der ersten (64) und zweiten (66) Schicht aus einem Material gebildet ist, das aus der Gruppe ausgewählt ist, die aus Siliciumnitrid, Siliciumcarbid, Aluminium, Tantal und Siliciumdioxid zusammengesetzt ist.

8. Druckpatronenbehälter/Filteranordnung nach einem vorangehenden Anspruch, bei der nur ein Teil der zweiten ätzbeständigen Materialschicht (66) Poren umfasst.

9. Druckpatronenbehälter/Filteranordnung nach einem vorangehenden Anspruch, bei der die Poren eine Größe von zwischen 0,5 µm² und 25 µm² aufweisen.

10. Druckpatronenbehälter/Filteranordnung nach einem vorangehenden Anspruch, bei der die Poren eine Größe von zwischen 1 µm² und 17 µm² aufweisen.

11. Druckpatronenbehälter/Filteranordnung nach einem vorangehenden Anspruch, bei der die Poren (68) eine Größe von 1 µm² bis 8 µm² aufweisen.

12. Druckpatronenbehälter/Filteranordnung nach einem vorangehenden Anspruch, bei der die Poren (68) eine Größe von 1 µm² bis 5 µm² aufweisen.

13. Druckpatronenbehälter/Filteranordnung nach einem vorangehenden Anspruch, bei der die zweite Schicht eine Dicke von 1 µm bis 20 µm aufweist.

14. Druckpatronenbehälter/Filteranordnung nach einem vorangehenden Anspruch, bei der die zweite Schicht (66) eine Dicke von 1 µm bis 2,5 µm aufweist.

15. Verfahren zum Bilden einer Druckpatronenbehälter/Filteranordnung zum Filtern von Verunreinigungen aus Tinte, bevor die Tinte zu einem Heizerchip (50) fließt, wobei die Druckpatronenbehälter/Filteranordnung umfasst: einen Behälter (22), der mindestens eine Kammer (22a) zur Aufnahme von Tinte umfasst, wobei der Behälter (22) ein Steigrohr (23) umfasst, das sich in der Kammer (22a) erstreckt und einen Durchgangsweg (23a) für Tinte zum Herausfließen aus der Kammer (22a) begrenzt, wobei das Verfahren **dadurch gekennzeichnet ist, dass** es die Schritte zum Bilden eines Filters umfasst :
Bereitstellen eines Siliciumsubstrats (62), das eine entgegengesetzte erste (62a) und zweite Oberfläche (62b) aufweist;
Bilden einer ersten ätzbeständigen Materialschicht (64) auf der ersten Substratoberfläche (62b), wobei die erste Schicht (64) mindestens eine Öffnung (64a) umfasst, die sich durch die erste Schicht (64) erstreckt;
Bilden einer zweiten ätzbeständigen Materialschicht (66) auf der zweiten Substratoberfläche (62b), wobei die zweite Schicht (66) eine Mehrzahl von Poren (68) umfasst, die sich durch die zweite Schicht (66) erstrecken, wobei die Mehrzahl von Poren (68) eine Größe von zwischen 0,5 µm² und 25 µm² aufweist; und
Bilden von mindestens einem Durchlass (62c) durch das Siliciumsubstrat, der mit der Öffnung in der ersten Schicht (64a) und den Poren (68) in der zweiten Schicht (66) in Verbindung steht;
Bilden einer äußeren Umfangsaussparung (361) in dem Filter; und umfassend die Schritte zum Bilden der Druckpatronenbehälter/Filteranordnung:
In-Eingriff-bringen der äußeren Umfangsaussparung mit einem Endteil (23c) des Steigrohrs.

16. Verfahren nach Anspruch 15, bei dem der Schritt eines Bildens von mindestens einem Durchlass (62c) in dem Siliciumsubstrat (62) den Schritt umfasst: Wegätzen eines Teils des Siliciumsubstrats unter Verwendung einer Tetramethylammoniumhydroxid-Ätzlösung.

## Revendications

1. Assemblage formant un filtre/récipient de cartouche d'encre comprenant :
un récipient (22) incluant au moins une chambre (22a) destinée à recevoir de l'encre, ledit récipient incluant un tuyau vertical (23) s'étendant dans ladite chambre (22a) et définissant une voie de passage (23a) destinée à l'écoulement de l'encre hors de ladite chambre ; et
un filtre (60), ledit filtre (60) associé audit tuyau vertical (23) pour filtrer des impuretés provenant de l'encre avant que l'encre ne s'écoule hors dudit tuyau vertical (23) ;
ledit assemblage formant un filtre/récipient de cartouche d'impression **caractérisé en ce que** ledit filtre (60) comprend un substrat de silicium (62) ayant des première (62a) et seconde (62b) surfaces en opposition et un passage (62c) s'étendant au travers de ces dernières, une première couche de matériau résistant à une attaque chimique (64) formée sur ladite première surface (62a) de substrat et incluant au moins une ouverture (64a) qui s'étend au travers de ladite première couche (64) et communique avec ledit passage (62c) de substrat, et une seconde couche de matériau (66) résistant à une attaque chimique formée sur ladite seconde surface (62b) de substrat et incluant une pluralité de pores (68) s'étendant au travers de ladite seconde couche (66) et communiquant avec ledit passage de substrat, ladite seconde couche définissant une couche formant un filtre qui filtre des impuretés provenant de l'encre traversant ladite seconde couche ; dans laquelle ledit filtre (60) inclut un évidement circonférentiel externe (361) qui est adapté afin de s'accoupler à une portion d'extrémité dudit tuyau vertical (23c).

2. Assemblage formant un filtre/récipient de cartouche d'impression selon la revendication 1, dans lequel ledit tuyau vertical (23) comprend une colonne creuse ayant une pièce d'appui interne (23b) qui est adaptée afin de recevoir ledit filtre (60).

3. Assemblage formant un filtre/récipient de cartouche d'impression selon la revendication 2, dans lequel ladite colonne est généralement de forme rectangulaire.

4. Assemblage formant un filtre/récipient de cartouche d'impression selon l'une quelconque des revendications précédentes, dans lequel ladite pluralité de pores (268) s'étendant au travers de ladite seconde couche (66) sont divisées en deux sections (262) ou plus, ladite seconde couche (66) incluant en outre au moins une nervure de renforcement (270) positionnée entre lesdites deux sections (262) de filtre.

5. Assemblage formant un filtre/récipient de cartouche d'impression selon l'une quelconque des revendications précédentes, dans lequel au moins une desdites première (64) et seconde (66) couches est formée à partir d'un métal.

6. Assemblage formant un filtre/récipient de cartouche d'impression selon la revendication 5, dans lequel ledit métal comprend de l'aluminium ou du tantale.

7. Assemblage formant un filtre/récipient de cartouche d'impression selon l'une quelconque des revendications 1 à 4, dans lequel au moins une desdites première (64) et seconde (66) couches est formée à partir d'un matériau choisi parmi le groupe composé de nitrure de silicium, carbure de silicium, d'aluminium, de tantale et de dioxyde de silicium.

8. Assemblage formant un filtre/récipient de cartouche d'impression selon l'une quelconque des revendications précédentes, dans lequel seule une portion de ladite seconde couche de matériau résistant à une attaque chimique (66) inclut des pores.

9. Assemblage formant un filtre/récipient de cartouche d'impression selon l'une quelconque des revendications précédentes, dans lequel lesdits pores ont une taille allant de 0,5 µm² à 25 µm².

10. Assemblage formant un filtre/récipient de cartouche d'impression, selon l'une quelconque des revendications précédentes, dans lequel lesdits pores ont une taille allant de 1 µm² à 17 µm².

11. Assemblage formant un filtre/récipient de cartouche d'impression selon l'une quelconque des revendications précédentes, dans lequel lesdits pores (68) ont une taille allant de 1 µm² à 8 µm².

12. Assemblage formant un filtre/récipient de cartouche d'impression selon l'une quelconque des revendications précédentes, dans lequel lesdits pores (68) ont une taille allant de 1 µm² à 5 µm².

13. Assemblage formant un filtre/récipient de cartouche d'impression selon l'une quelconque des revendications précédentes, dans lequel ladite seconde couche a une épaisseur allant de 1 µm à 20 µm.

14. Assemblage formant un filtre/récipient de cartouche d'impression selon l'une quelconque des revendications précédentes, dans lequel ladite seconde couche (66) a une épaisseur allant de 1 µm à 2,5 µm.

15. Procédé de formation d'un assemblage formant un filtre/récipient de cartouche d'impression destiné à filtrer des impuretés provenant de l'encre avant que l'encre ne s'écoule vers une puce de chauffage (50), ledit assemblage formant un filtre/récipient de cartouche d'impression comprenant un récipient (22) incluant au moins une chambre (22a) destinée à recevoir de l'encre, ledit récipient (22) incluant un tuyau vertical (23) s'étendant dans ladite chambre (22a) et définissant une voie de passage (23a) pour que l'encre s'écoule hors de ladite chambre (22a), ledit procédé destiné à former un filtre est **caractérisé en ce qu'**il comprend les étapes consistant à :
mettre à disposition un substrat de silicium (62) ayant des première (62a) et seconde (62b) surfaces en opposition ;
former une première couche de matériau résistant à une attaque chimique (64) sur ladite première surface (62b) de substrat, ladite première couche (64) incluant au moins une ouverture (64a) qui s'étend au travers de ladite première couche (64);
former une seconde couche de matériau (66) résistant à une attaque chimique sur ladite seconde surface (62b) de substrat, ladite seconde couche (66) incluant une pluralité de pores (68) s'étendant au travers de ladite seconde couche (66), ladite pluralité de pores (68) ayant une taille entre 0,5 µm² et 25 µm² ; et
former au moins un passage (62c) au travers dudit substrat de silicium qui communique avec ladite ouverture dans ladite première couche (64a) et lesdits pores (68) dans ladite seconde couche (66) ;
former un évidement circonférentiel externe (361) dans ledit filtre ; et comprenant les étapes destinées à former ledit assemblage formant un filtre/récipient de cartouche d'impression consistant à :
accoupler ledit évidement circonférentiel externe à une portion d'extrémité (23c) dudit tuyau vertical.

16. Procédé selon la revendication 15, dans lequel ladite étape consistant à former au moins un passage (62c) dans ledit substrat de silicium (62) comprend l'étape consistant à enlever par attaque chimique une portion dudit substrat de silicium à l'aide d'une solution d'attaque chimique d'hydroxyde de tétraméthylammonium.
